(19)

Europäisches
Patentamt
European
Patent Office
Office européen
des brevets

(11) **EP 3 065 404 A1**

(12) **EUROPEAN PATENT APPLICATION**

(43) Date of publication:
**07.09.2016 Bulletin 2016/36**

(51) Int Cl.:
**H04N 19/43** $^{(2014.01)}$     **H04N 19/59** $^{(2014.01)}$
**H04N 19/577** $^{(2014.01)}$

(21) Application number: **15305342.6**

(22) Date of filing: **05.03.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Oisel, Lionel
35576 CESSON SEVIGNE CEDEX (FR)**
• **Kervec, Jonathan
35576 CESSON SEVIGNE CEDEX (FR)**
• **Thebault, Cedric
35576 CESSON SEVIGNE CEDEX (FR)**

(74) Representative: **Huchet, Anne
Technicolor
1, rue Jeanne d'Arc
92443 Issy-les-Moulineaux Cedex (FR)**

(54) **METHOD AND DEVICE FOR COMPUTING MOTION VECTORS ASSOCIATED WITH PIXELS OF AN IMAGE**

(57) A method for obtaining a motion vector associated with a pixel (210) of an image (11) temporally surrounded by a first source image (10) and a second source image (12). In order to reduce the memory footprint, the method comprises storing a plurality of rows (301 to 310; 321 to 330) selected in the first source image (11) and in the second source image (12), the stored rows (301 to 310; 321 to 330) being selected according to at least a vertical pitch that varies according to a vertical distance with regard to a reference row (2000; 20002) in each of the first (10) and second (12) source images, the reference rows corresponding to the rows of the first and second source images vertically aligned with said pixel (210); and obtaining the motion vector from at least a part of the stored rows.

Fig 3

**Description**

**1. Technical domain**

The present disclosure relates to the domain of image processing and more specifically to the domain of motion vector computation and/or motion compensated interpolation techniques.

**2. Background art**

According to the background art, it is known to compute a motion field between two consecutive source images to generate an interpolated image by performing motion compensated interpolation from one or both source images. To that aim, it is necessary to store in memory the content of the source images to compute the motion field and perform the interpolation. To optimize the computation of the motion field and/or during the interpolation process, the cache of the processor(s) performing the computation may be used. However, the size of such a cache memory, or even the size of memories used for storing the source images, is limited, which does not enable to store the whole content of the source images.

**3. Summary**

The purpose of the present disclosure is to overcome at least one of these disadvantages of the background art.
The present disclosure relates to a method of obtaining a motion vector associated with a pixel of an image temporally surrounded by a first source image and a second source image. The method comprises:

- storing a plurality of rows selected in the first source image and in the second source image, the stored rows being selected according to at least a vertical pitch that varies according to a vertical distance with regard to a reference row in each of the first and second source images, the reference rows corresponding to the rows of the first and second source images vertically aligned with the pixel;
- obtaining the motion vector from at least a part of the stored rows.

According to a particular characteristic, the at least a vertical pitch increases with the vertical distance.
Advantageously, the stored rows of the first source image are selected according to a first vertical pitch and the stored rows of the second source image are selected according to a second vertical pitch, the first vertical pitch and the second vertical pitch varying differently.
According to a specific characteristic, the at least a vertical pitch varies according to a temporal distance separating the image from the first source image or the second source image.
Advantageously, the number of stored rows of the first source image and of the second source image depends from a temporal distance separating the image from the first source image and the second source image respectively.
According to another characteristic, the method further comprises computing a value to be associated with the pixel by motion-compensated interpolation of the first and second source images based on at least a part of the stored rows and on the obtained motion vector.
The present disclosure also relates to a device configured to obtain a motion vector associated with a pixel of an image temporally surrounded by a first source image and a second source image, the device comprising:

- storage means for storing a plurality of rows selected in the first source image and in the second source image, the stored rows being selected according to at least a vertical pitch that varies according to a vertical distance with regard to a reference row in each of the first and second source images, the reference rows corresponding to the rows of the first and second source images vertically aligned with the pixel;
- processing means for obtaining the motion vector from at least a part of the stored rows.

The present disclosure also relates to a device configured to obtain a motion vector associated with a pixel of an image temporally surrounded by a first source image and a second source image, the device comprising:

- a memory configured to store a plurality of rows selected in the first source image and in the second source image, the stored rows being selected according to at least a vertical pitch that varies according to a vertical distance with regard to a reference row in each of the first and second source images, the reference rows corresponding to the rows of the first and second source images vertically aligned with the pixel;
- at least a processor configured to obtain the motion vector from at least a part of the stored rows.

The present disclosure also relates to a device configured to obtain a motion vector associated with a pixel of an image temporally surrounded by a first source image and a second source image, the device comprising:

- a storage device for storing a plurality of rows selected in the first source image and in the second source image, the stored rows being selected according to at least a vertical pitch that varies according to a vertical distance with regard to a reference row in each of the first and second source images, the reference rows corresponding to the rows of the first and second source images vertically aligned with the pixel;
- a processing unit configured to obtain the motion vector from at least a part of the rows stored in the storage device.

Advantageously, the device further comprises means for selecting the stored rows of the first source image according to a first vertical pitch and the stored rows of the second source image according to a second vertical pitch, the first vertical pitch and the second vertical pitch varying differently.

According to a specific characteristic, the at least a processor is further configured to select the stored rows of the first source image according to a first vertical pitch and the stored rows of the second source image according to a second vertical pitch, the first vertical pitch and the second vertical pitch varying differently.

According to another characteristic, the device further comprises means for computing a value to be associated with the pixel by motion-compensated interpolation of the first and second source images based on at least a part of the stored rows and on the obtained motion vector.

Advantageously, the at least a processor is further configured to compute a value to be associated with the pixel by motion-compensated interpolation of the first and second source images based on at least a part of the stored rows and on the obtained motion vector.

The invention also relates to a computer program product comprising instructions of program code for executing steps of the method of obtaining a motion vector, when the program is executed on a computer.

The invention also relates to a (non-transitory) processor readable medium having stored therein instructions for causing a processor to perform at least the steps of the method of obtaining a motion vector.

## 4. List of figures

The present disclosure will be better understood, and other specific features and advantages will emerge upon reading the following description, the description making reference to the annexed drawings wherein:

- figure 1 shows a method for temporal interpolation of an image from source images, according to a particular embodiment of the present principles;
- figures 2A and 2B shows the selection of rows of the source images of figure 1 to obtain a motion vector associated with a pixel of the image to be interpolated of figure 1, according to two non-limiting examples of a first particular embodiment of the present principles;
- figure 3 shows the selection of rows of the source images of figure 1 to obtain a motion vector associated with a pixel of the image to be interpolated of figure 1, according to a second particular embodiment of the present principles;
- figure 4 shows the selection of rows of the source images of figure 1 to obtain a motion vector associated with a pixel of the image to be interpolated of figure 1, according to a third particular embodiment of the present principles;
- figure 5 shows the selection of rows of the source images of figure 1 to obtain a motion vector associated with a pixel of the image to be interpolated of figure 1, according to a fourth particular embodiment of the present principles;
- figure 6 shows a device configured to obtain a motion vector associated with a pixel of the image to be interpolated of figure 1, according to a first particular embodiment of the present principles;
- figure 7 shows a device configured to obtain a motion vector associated with a pixel of the image to be interpolated of figure 1, according to a second particular embodiment of the present principles;
- figures 8 and 9 show a method of obtaining a motion vector implemented in the device of figure 6 or of figure 7, according to two particular embodiments of the present principles.

## 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

While not explicitly described, the present embodiments and variants may be employed in any combination or sub-combination.

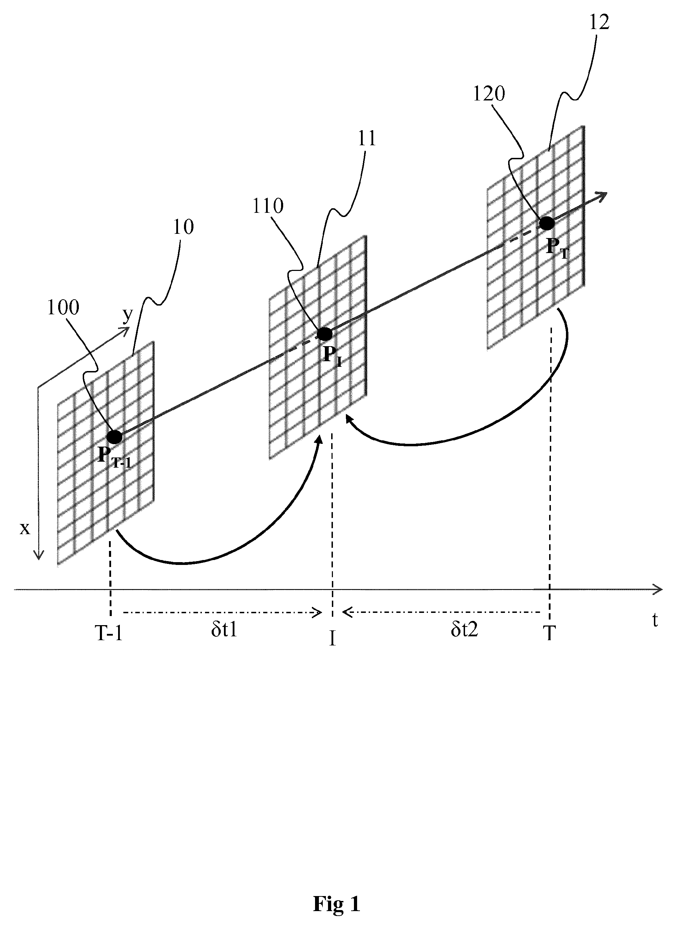

**Figure 1** shows a method for motion compensated interpolation of source images 10 and 12, according to an exemplary and non-limiting embodiment of the present principles. The image I 11 to be interpolated is interpolated from two source images 10 and 12 of for example a source video sequence, the first 10 of these source images being called the preceding source image T-1 and the second 12 of these images being called the current source image T. The temporal distance between the previous source image T-1 10 and the image to be interpolated I 11 is equal to $\delta t1$ and the temporal distance between the image to be interpolated I 11 and the current source image T 12 is equal to $\delta t2$. In the rest of the description, the preceding source image will be called the first source image and the current source image will be called the second source image. The motion compensated video interpolation advantageously comprises a step of motion estimation followed by a step of interpolation. The motion estimation consists in defining a motion vector for all or part of the points of the image to be interpolated I 11, said image being positioned temporally between the two source images T-1 10 and T 12. The motion estimation step is advantageously carried out in 2 steps: a step of prediction and a step of correction. The step of prediction consists in defining, for each of the pixels of the image to be interpolated I 11, a motion vector from motion vectors already calculated for neighbouring pixels and the projection of a motion vector calculated for the first source image T-1 10 and passing by the pixel considered of the image to be interpolated I 11. The motion vectors already calculated are for example those of the n neighbouring pixels of the preceding row of pixels. The prediction consists then in selecting, among the n+1 pre-calculated motion vectors, the motion vector generating the smallest DFD (Displacement Frame Difference) value. The step of correction consists then in rotating around its axis the motion vector selected to further reduce, if possible, the DFD of the pixel considered of the image to be interpolated I 11. The motion estimation is advantageously carried out for a number of the pixels of the image to be interpolated I 11, for example 25% of the totality of the pixels, or one pixel in four or 50% of the totality of pixels, or one pixel in two. According to a variant, the motion estimation is carried out for the set of pixels of the image to be interpolated I 11. According to another variant, the step of motion estimation is carried out in a single step.

The step of interpolation, that follows the step of motion estimation is for example a bilinear interpolation. In the case of the image to be interpolated I 11 between the first source image T-1 10 and the second source image T 12, the motion vector defined previously points to an image point of each of the source images, this image point being either a pixel, or a point situated between 4 pixels. In the case of a single frame interpolation, the bilinear interpolation then consists in assigning to the considered pixel $P_I$ 110 of the image to be interpolated a value that is a bilinear function f of values of 4 pixels pointed to in one of the source images (for example the second source image) by the estimated motion vector for the pixel $P_I$. For example, if $NV_1$, $NV_2$, $NV_3$ and $NV_4$ designate the values (for example their video level NV) of 4 pixels close to the point $P_T$ 120 pointed by the motion vector in the second source image T 12 and if $\alpha_1$, $\alpha_2$, $\alpha_3$ and $\alpha_4$ are weighting factors representative of the proximity of said pixels with the image point $P_T$, the value assigned to the pixel $P_I$ 110 of the image to be interpolated I 11 is $\left( \sum_{i=1}^{4} \alpha_i \cdot NV_i \right) / \sum_{i=1}^{4} \alpha_i$ . If the motion vector points to a particular pixel among the 4 pixels, the weighting factor assigned to the 3 other pixels is null and the value assigned to the pixel considered is the value of this particular pixel. In the case of a double frame interpolation, the bilinear interpolation is made in the same way but with 8 pixels, namely 4 pixels of the first source image and 4 pixels of the second source image. According to a variant, the source image pointed to by the motion vector (or its opposite) is the first source image T-1 10 and the image point pointed to is $P_{T-1}$ 100. According to a variant, the interpolation is carried out for example by temporal linear interpolation on a fixed area, by spatio-temporal filtering on the critical areas of the image (that is to say the areas for which the confidence of the motion vector is low) or by any method known to those skilled in the art. According to another variant, the interpolation is carried out by any combination of the methods cited previously.

According to a variant, the motion compensated interpolation is carried out in a single step.

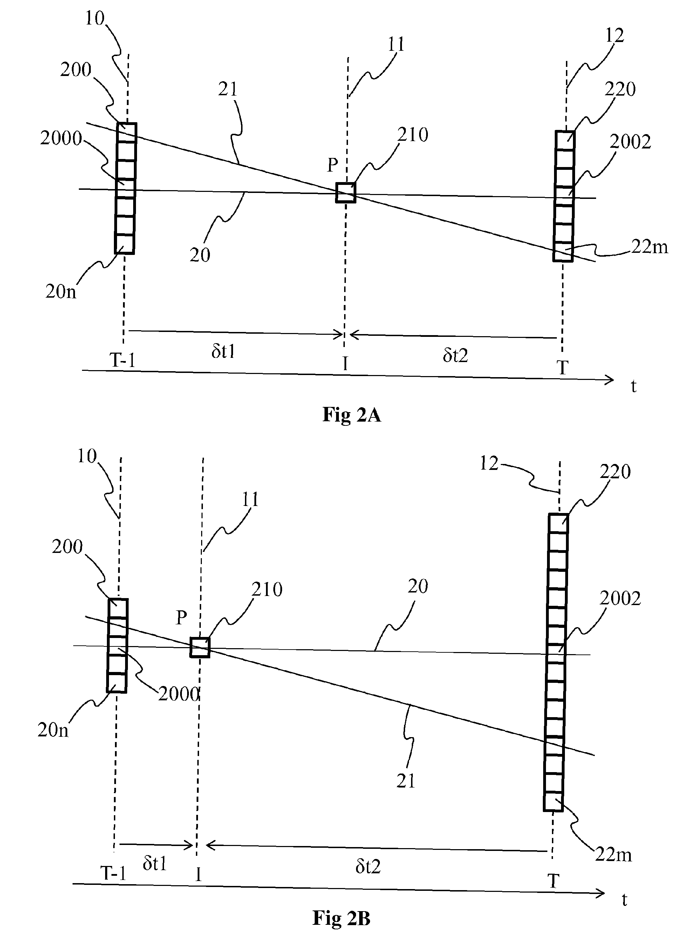

**Figures 2A and 2B** show rows of the source images 10 and 12 to be stored in a memory to compute a motion vector associated with one pixel 210 of the image to be interpolated 11, according to two non-limiting examples of a particular embodiment of the present principles. According to this non-limiting embodiment, the numbers n (respectively m) of rows of the first source image 10 (respectively second source image 12) to be stored in memory(ies) depends from the temporal distance $\delta t1$ between the image 11 and the first source image 10 (respectively from the temporal distance $\delta t2$ between the image 11 and the second source image 12). The examples illustrated in figures 2A and 2B are both directed to one single pixel P 210 of the image 11 to be interpolated. Naturally, process described with regard to this single pixel P 210 may be reproduced for several pixels of the image 11 or for all pixels of the image 11.

In the example of figure 2A, the image 11 to be interpolated is at equal distance, in a temporal point of view, from the first 10 and second 12 source images (i.e. $\delta t1 = \delta t2$). This means that the number n of rows selected in the first image for storage purpose is equal to the number m of rows selected in the second image 12 for storage purpose. Rows of the first image source 10 stored in the memory are referenced 200 to 20n and rows of the second source image 12 are referenced 220 to 22m, where n and m are integers. Considering a maximum motion range $v_{max}$ in the vertical direction, i.e. in a direction orthogonal to the rows that may be expressed in a number of pixels or equivalently in a number of rows, the integers n and m may be obtained with the following equations:

$$n = 2 * v_{max} * \frac{\delta t1}{\delta t1 + \delta t2} \qquad \text{equation 1}$$

$$m = 2 * v_{max} * \frac{\delta t2}{\delta t1 + \delta t2} \qquad \text{equation 2}$$

In the example of figure 2A where we have $\delta t1 = \delta t2$, we obtain from equations 1 and 2: n = m = $v_{max}$. The maximum motion range $v_{max}$ advantageously corresponds to the maximum vertical displacement that may be observed between two consecutive images. The value associated with $v_{max}$ is advantageously determined in an empirical way or this value may be set by default in the system or may be set by a user. The rows of the first source image 10 (respectively the second source image 12) that are selected to be stored correspond advantageously to a group of rows centred on a first reference row 2000 of the first source image 10 (respectively centred on a second reference row 2002 of the second source image 12). The number of rows located above the first reference row 2000 is advantageously equal to the number of rows located below the first reference row 2000, i.e. (n-1)/2. In a same way, The number of rows located above the second reference row 2002 is advantageously equal to the number of rows located below the first reference row 2002, i.e. (m-1)/2, i.e. (n-1)/2. If the index of the first reference row 2000 (respectively the second reference row 2002) is "i", the index of the rows located above are "i+1", "i+2" to "i+(n-1)/2" and the index of the rows located below are "i-1", "i-2" to "i-(n-1)/2". The selection of the rows to be stored is advantageously performed via the index associated with each row, with the exception when the pixel P is located near the upper edge or the lower edge of the image to be interpolated. The first reference row 2000 and the second reference row 2002 are advantageously determined as being the rows of the first and second source images respectively vertically aligned with the row of the image 11 comprising the pixel P 210, i.e. the rows of the first and second source images crossed by the motion vector 20 passing through the pixel P 210 and corresponding to a zero motion between the first and second source images. The vector 21 corresponds to the maximum vertical motion between the first and second source images.

In the example of figure 2B, the image 11 to be interpolated is closer to the first source image 10 than the second source image 12 in a temporal point of view (i.e. $\delta t1 < \delta t2$). According to the equations 1 and 2, we obtain n < m. In both examples, the number of rows to be stored is the same, i.e. n+m = 2*$v_{max}$ (while the number of rows is at least 4* $v_{max}$ according to the background art) but the distribution between the rows selected in the first source image 10 and in the second source image 12 is different. If the image 11 is temporally closer to the first source image 10 than the second source image 12, the number of rows selected in the first source image is less than the number of rows selected in the second source image. In contrast, If the image 11 is temporally closer to the second source image 12 than the first source image 10, the number of rows selected in the first source image 10 is greater than the number of rows selected in the second source image 12.

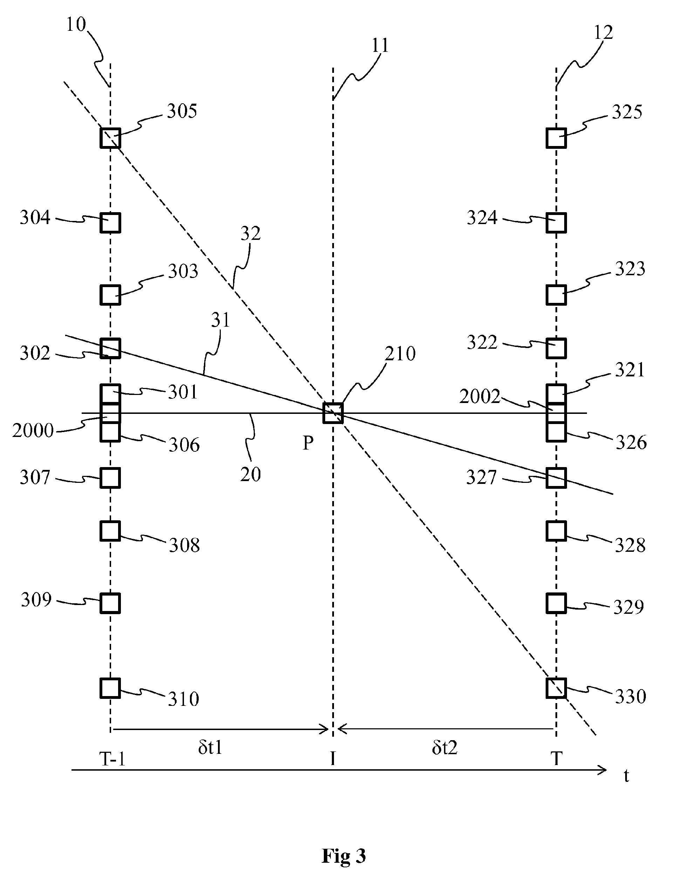

**Figure 3** shows rows of the source images 10 and 12 to be stored in a memory to compute a motion vector associated with one pixel 210 of the image to be interpolated 11, according to a particular and non-limiting embodiment of the present principles. According to the non-limiting example of figure 3, the image 11 is at equal distance, in a temporal point of view, from the first 10 and second 12 source images (i.e. $\delta t1 = \delta t2$). According to this embodiment, the sequence of indices of the rows selected in each of the first and second source images for storage is not continuous, i.e. the rows to be stored may be adjacent or not, depending on the area of the source image to which they belong. More specifically, the rows 301 to 310 (respectively 321 to 330) of the first source image 10 (respectively the second source image 12) that are selected to be stored are selected according to a pitch, the value of which varies according to a vertical distance separating with regard to the first reference row 2000 (respectively the second reference row 2002). It is understood with vertical distance the distance between for example a pixel of the first reference row 2000 (respectively the second reference row 2002) belonging to a given column of the first source image 10 (respectively the second source image 12) and any pixel of the same given column. Said differently, the vertical distance is measured according to a line which is orthogonal to the rows of the first source image 10 (respectively the second source image 12), for example orthogonal to the first reference row 2000 (respectively the second reference row 2002). The vertical pitch advantageously corresponds to an integer value which may represent a difference between indices of two rows of the first source image 10 (respectively the second source image 12), or between the index of any row of the first source image 10 (respectively the second source image 12) and the index of the first reference row 2000 (respectively the second source image 12). Advantageously, the greater the vertical distance, the greater the value of the vertical pitch. The variation of the vertical pitch may be continuous or not. As an example, the vertical pitch may take the values 1, 3, 6, 10, 15 and so on. According to another example, the vertical pitch may take the values 1, 2, 3, 4, 5, 7, 9, 12, 16 and so on. Selecting rows of a source image according to a varying pitch enables to select only a part of the rows of the source image, which reduces the memory footprint. Varying the pitch according to the vertical distance enables to select more rows in areas of the source image which are more important for motion computation than other areas. Indeed, the smaller the amplitude of the motion vector, the more accurate the estimation. It is then interesting to have more rows available around the reference row as this area (i.e. around the reference row) of the source image comprises the rows that may be used for the computation of motion vector of small amplitude. In contrast, the areas further from the reference row comprise rows that may be used to compute motion vectors of greater amplitude. As the computation of motion vectors of large amplitude is less accurate than the computation of motions vectors of smaller amplitude, it is less important to have access to all rows of the source images located far away from the reference rows. A motion vector with small amplitude is illustrated with reference 31 and a motion vector with a larger amplitude is illustrated with reference 32. As it can be seen on figure 3, the amplitude of the vertical motion associated with the motion vector 31 is 6 pixels (or 6 rows) which corresponds to the difference in pixels between the extremity of the motion vector 31 and the first source image 10 (i.e. the row 302) on one hand and the first reference row 2000 on the other hand time 2. We thus have $amplitude_{31}$ = (index of row 302 - index of row 2000) * 2. In a same way, the amplitude of the motion vector 32 may be obtained, this amplitude being 30 ($amplitude_{32}$ = (index of row 305 - index of row 2000) * 2).

In the example of figure 3, rows located above the first reference row 2000 of the first source image 10 that are selected for storage purpose are the rows referenced 301, 302, 303, 304, 305, the row referenced 301 being the closest one to the reference row 2000 and the row referenced 305 being the furthest one to the reference row 2000. Assuming that the index of the first reference row 2000 is "i", the first pitch value is 1 which enables to select the row 301 having an index i+1, i.e. the row directly adjacent to the first reference row 2000. The second pitch value is for example 3, which enables to select the row 302 having an index equal to i+3. The third pitch value is for example 6, which enables to select the row 303 having an index equal to i+6. The fourth pitch value is for example 10, which enables to select the row 304 having an index equal to i+10. The fifth pitch value is for example 15, which enables to select the row 305 having an index equal to i+15. The hereinabove examples for the vertical pitch correspond to a pitch corresponding to a difference of index between a given row and the first reference row. The same applies to select the rows located below the first reference row 2000 by running through the first source image toward the bottom of the first source image 10, the selected rows being the row 306 having an index value i-1 (i.e. i minus the first pitch value), the row 307 having an index value i-3 (i.e. i minus the second pitch value), the row 308 having an index value i-6 (i.e. i minus the third pitch value), the row 309 having an index value i-10 (i.e. i minus the fourth pitch value) and the row 310 having an index value i-15 (i.e. i minus the fifth pitch value).

According to another embodiment, the vertical pitch may correspond to a difference of indices between two rows. For example, the first pitch value would have been 1 corresponding to the difference of indices between the row 301 and the first reference row 2000. The second pitch value would have been 2 corresponding to the difference of indices between the row 302 and the row 301. The third pitch value would have been 3 corresponding to the difference of indices between the row 303 and the row 302. The fourth pitch value would have been 4 corresponding to the difference of indices between the row 304 and the row 303. The fifth pitch value would have been 5 corresponding to the difference of indices between the row 305 and the row 304. The same applies to select the rows located below the first reference row 2000 by running through the first source image toward the bottom of the first source image 10. Of course a same vertical pitch may be used to select several rows, for example a vertical pitch of value equal to 1 may be used to select the 3 first rows (above and below the first reference row, i.e. to select a total of 6 rows), then a vertical pitch value equal to 3 may be used to select 4 additional rows in each direction (toward the top of the first source image and toward the bottom of the first source image) and so on.

The same reasoning applies to select rows 321 to 325 and 326 to 330 of the second source image 12, the same vertical pitch values than the used for the first source image 10 being used for the second source image 12. According to a variant, the vertical pitch values used for the second source image 12 are different from the vertical pitch values used for the first source image 10.

The embodiment of figure 3 may be described in terms of subsampling of the first and second source images. Indeed, the selection of rows for storage purpose may be seen as a subsampling of the rows. The vertical subsampling gets higher while vertically moving away from the reference row 2000 or 2002. Such a subsampling may be called adaptive subsampling. The subsampling can be for example controlled with a parameter that may be directly estimated from the number of rows allowed by the memory and the maximum vertical motion range $v_{max}$.

The embodiment of figure 3 enable to further reduce the memory footprint in comparison with the embodiment of figures 2A and 2B but with less quality for the computation of the motion vector, especially for motion vectors having large amplitude.

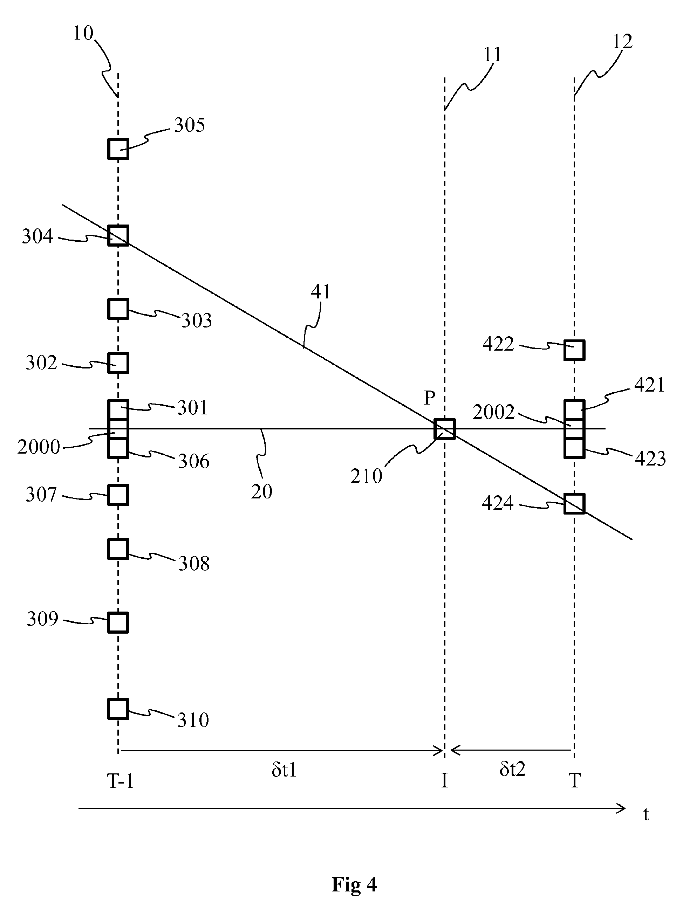

**Figure 4** shows rows of the source images 10 and 12 to be stored in a memory to compute a motion vector associated with one pixel 210 of the image to be interpolated 11, according to a particular and non-limiting embodiment of the present principles. According to the non-limiting example of figure 4, the image 11 is temporally closer to the second source image 12 than to the first source image 10 (i.e. $\delta t1 > \delta t2$). According to the embodiment of figure 4, rows 401 to 405 and 406 of 410 of the first source image 10 and rows 421 to 424 are selected by using varying vertical pitch(es) varying (or said differently by implementing an adaptive subsampling) as described with regard to figure 3. In addition, the maximum number of rows selected in each of the first and second source images is adapted for each first and second source image according to their respective temporal distance to the image 11, as described with regard to figures 2A and 2B, i.e. by using the temporal distances $\delta t1$ and $\delta t2$ and the equations 1 and 2. As $\delta t1 > \delta t2$, the number of rows selected in the second source image 12 is less than the number of rows selected in the first source image 10 but still less that the number obtained with the equations 1 and 2, as a selection of the rows to be stored is further performed via the adaptive subsampling.

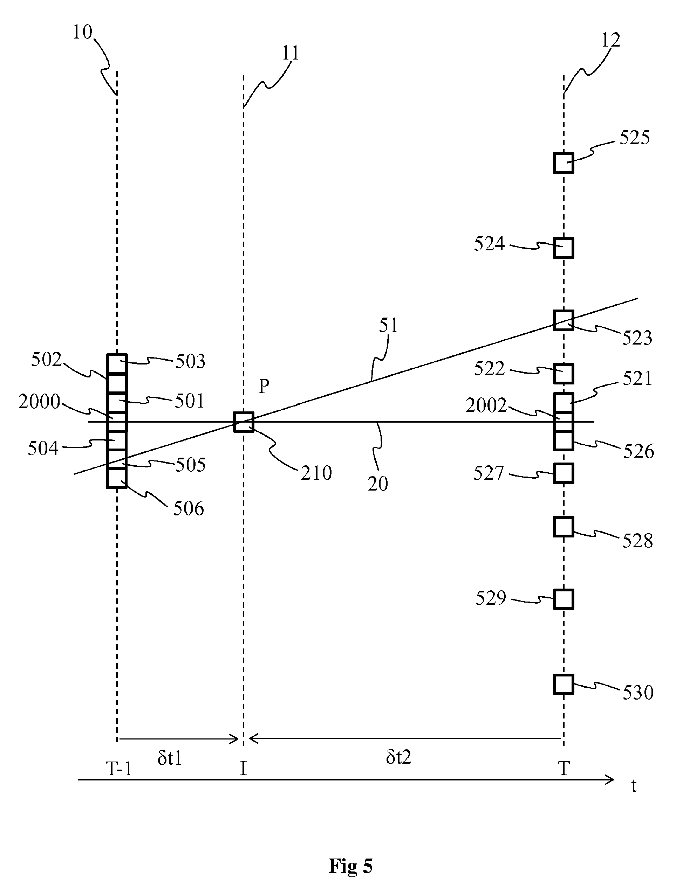

**Figure 5** shows rows of the source images 10 and 12 to be stored in a memory to compute a motion vector associated with one pixel 210 of the image to be interpolated 11, according to a particular and non-limiting embodiment of the present principles. According to the non-limiting example of figure 4, the image 11 is temporally closer to the first source image 10 than to the second source image 12 (i.e. $\delta t1 < \delta t2$). According to this embodiment, the numbers of rows candidate for selection in each of the first and second source images are determined as a function of the temporal distance between the considered source image and the image 11, as described with regard to figures 2A and 2B. As $\delta t1 < \delta t2$, the number of rows selected in the first source image 10 is less than the number of rows selected in the second source image 12. According to this embodiment, the rows of the source image being the closest one to the image 11 to be interpolated (i.e. the first source image 10 according to the non-limiting embodiment of figure 5) are selected in a way to form a group of adjacent rows, i.e. all rows around the first reference row 2000 are selected in the limit of the number of rows selected for storage purpose. Selecting all rows of the area of the first source image 10 used for computing the motion vector enables to enhance the quality of the determination of the motion vector in comparison to the embodiment of figure 4. Indeed, the closer the image 11 to a given source image (the first source image according to the non-limiting embodiment of figure 5), the more the influence of the area of this source image in the computation of the motion vector (or in the computation of the value associated with the pixel P), the more the required accuracy of this area of the source image. Regarding the second source image 12 which is further from the image 11, the rows 521 to 525 and 526 to 530 to be stored are selected by using a varying vertical pitch (or said differently by implementing an adaptive subsampling) as described with regard to figure 3, which means that the number of rows obtained via equation 2 is reduced thanks to the applying of the adaptive subsampling.

Such an embodiment enables to find a compromise between the memory footprint and the quality of the motion vector 51 computation and/or of the interpolation.

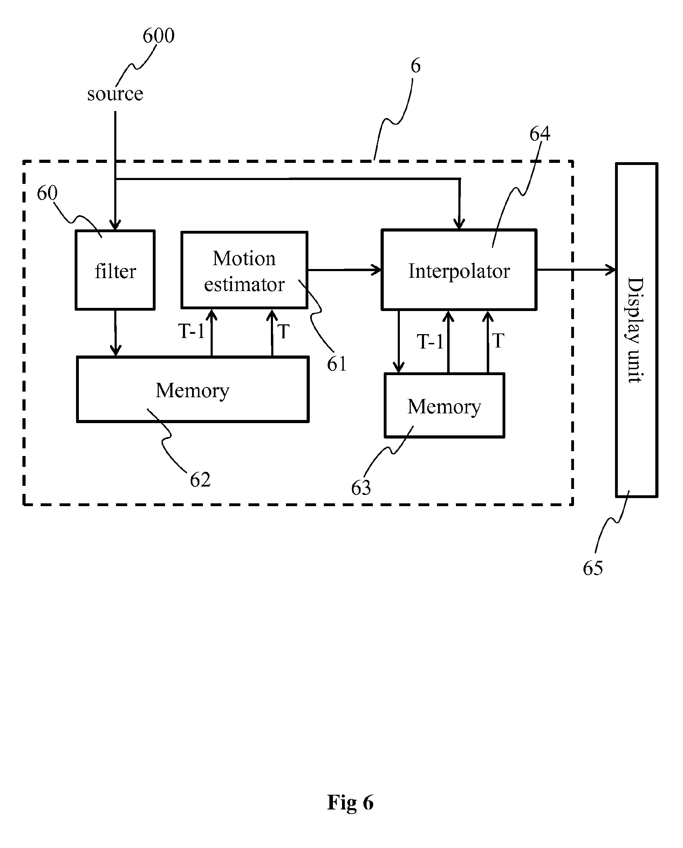

**Figure 6** diagrammatically shows a hardware embodiment of a processing unit 6 associated with a display device 65, according to a first particular and non-limiting embodiment of the present principles. The processing unit 6 takes for example the form of a programmable logical circuit of type FPGA (Field-Programmable Gate Array) for example, ASIC (Application-Specific Integrated Circuit) or a DSP (Digital Signal Processor). The processing unit is configured for the implementation of the vector motion computation process and/or motion compensated interpolation process described previously.

The processing unit 6 comprises the following elements:

- a pre-filter 60,
- a motion estimator 61,
- a storage device, comprising for example memories 62 and 63, for example of type RAM (Random Access Memory) or flash, able to memorize one or several source images,
- an interpolator 64,
- data buses connecting the elements 60 to 64.

A signal 600, for example a RGB (Red, Green, Blue) signal, representative of the source video sequence comprising the first and second source images is supplied at the input of the processing unit 6 to a pre-filter 60 via a data bus. The pre-filter 60 filters the rows composing the source images, that is to say the first source image 10 T-1 and the second source image 12 T as described with regard to figures 2 to 5, to store a reduced number of rows of each of the first and second source images in the memory 62 and/or in the memory 63. The motion estimator 61 determines a motion vector (Vx, Vy) for each pixel of the image to be interpolated, each of the pixels for which a motion vector is determined being associated with several pixels (4 or 2 according to the examples given above) of the first and second source images stored in the memory 62. A same motion vector (Vx, Vy) is associated with several pixels of the first and second source images. These determined motion vectors (Vx, Vy) are transmitted to the interpolator 64 via a data bus.

In parallel, the interpolator 64 receives for input the signal 600 representative of the first and second source images, the video levels of each of the pixels of each of the first image and second source images being stored in the memory 63. The interpolator 64 generates an interpolated image from the first and second images and associated motion vectors (Vx, Vy). The signal RGBi (for Red, Green, Blue interpolated) representative of interpolated images from the source video sequence is transmitted to a display unit 66, advantageously external to the processing unit 6.

According to another variant the memories 62 and 63 form only a single memory.

According to a further variant, the processing unit 6 is comprised in the display unit 65.

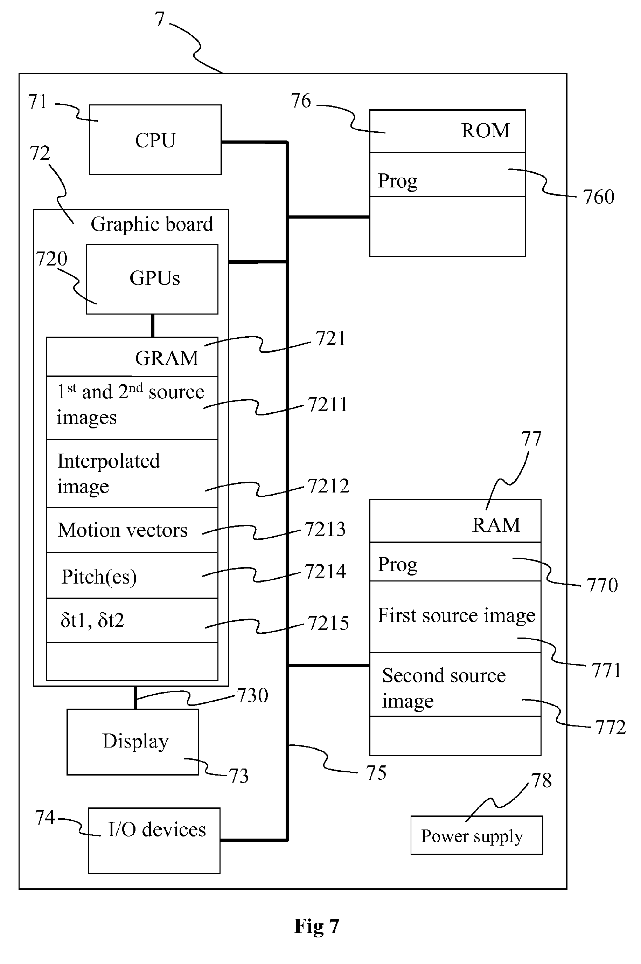

**Figure 7** diagrammatically shows a hardware embodiment of a processing unit 7 associated with a display device, according to a second particular and non-limiting embodiment of the present principles. The processing unit 7 can be used in place of the processing 6 of Figure 6 for image processing. The processing unit 7 is also configured for the obtaining of one or more motion vectors and/or for the creation of display signals of one or several interpolated images. The processing unit 7 corresponds for example to a personal computer (PC), a laptop, a tablet, a Smartphone or a Set-top box.

The processing unit 7 comprises the following elements, connected to each other by a bus 75 of addresses and data that also transports a clock signal:

- a microprocessor 71 (or CPU),
- a graphics card 72 comprising:

    • several Graphical Processor Units (or GPUs) 720,
    • a Graphical Random Access Memory (GRAM) 721,

- a non-volatile memory of ROM (Read Only Memory) type 76,
- a Random Access Memory or RAM 77,
- one or several I/O (Input/Output) devices 74 such as for example a keyboard, a mouse, a webcam, a remote controller, and
- a power source 78.

The processing unit 7 also comprises a display device 73 of display screen type directly connected to the graphics card 72 to display interpolated images generated in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, the display device is external to the processing unit 7 and is connected to the processing unit 7 by a cable or wirelessly for transmitting the display signals. The processing unit 7, for example the graphics card 72, comprises an interface for transmission or connection (not shown in figure 7) adapted to transmit a display signal to an external display means such as for example an LCD, an OLED screen, plasma screen or a video-projector.

It is noted that the word "register" used in the description of memories 721, 76 and 77 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 71 loads and executes the instructions of the program contained in the RAM 77.

The random access memory 77 notably comprises:

- in a register 770, the operating program of the microprocessor 71 responsible for switching on the device 7,
- data 771 representative of the first source image (for example data representative of the grey levels associated with the pixels of the first source image, for each channel RGB);
- data 772 representative of the second source image (for example data representative of the grey levels associated with the pixels of the second source image, for each channel RGB).

The algorithms implementing the steps of the method specific to the selection of rows, computation of motion vectors and/or interpolation of source images and described hereafter are stored in the memory GRAM 721 of the graphics card 72 associated with the processing unit 7 implementing these steps. When switched on and once the data 771 and 772 are loaded into the RAM 77, the graphic processors 720 of the graphics card 72 load these parameters into the GRAM 721 and execute the instructions of these algorithms in the form of microprograms of "shader" type using HLSL (High Level Shader Language) language or GLSL (OpenGL Shading Language) for example.

The random access memory GRAM 721 notably comprises:

- in a register 7211, the data representative of the first and second source images,
- in a register 7212, data representative of the interpolated image(s), for example grey levels associated with the pixels of the images obtained from motion compensated interpolation of the source image(s),
- in a register 7213, motion vectors associated with the pixels of the interpolated image(s);
- in a register 7214, the values of the vertical pitch and/or the subsampling parameter(s) used for selecting the rows of the first and second source images,
- in a register 7215, the values of $\delta t1$, $\delta t2$.

The GPUs 720 advantageously store in their cache/buffer the rows of the first and/or second source images that are selected according to the vertical pitch (or the subsampling parameter) and/or according to the values of $\delta t1$, $\delta t2$.

According to a variant, the power supply 78 is external to the processing unit 7.

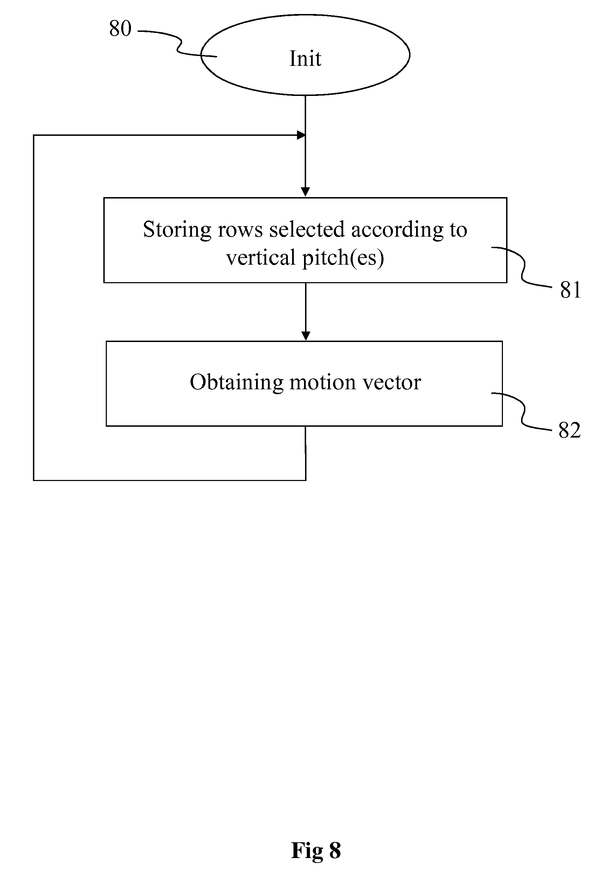

**Figure 8** shows a method of obtaining a motion vector associated with a pixel P of an image that is temporally surrounded by a first and a second source images, the method being implemented in the processing unit 6 or 7, according to a first particular and non-limiting embodiment of the present principles.

During an initialisation step 80, the different parameters of the processing unit 6 or 7 are updated. In particular, the values of the vertical pitch (or the subsampling parameters), the temporal distances $\delta t1$, $\delta t2$ as well as the data representative of the source images are initialised in any way.

Then, during a step 81, rows selected in the first and in the second source images are stored in one or more memories, cache or buffer. The rows to be stored are advantageously selected according to a vertical pitch, the values of which varying according to a vertical distance that is measured with regard to a reference row in each of the first and second source images. The reference rows correspond advantageously to one row in the first source image and one row in the second source image, which are both vertically aligned with the pixel P.

Then, during a step 82, the motion vector associated with the pixel P is obtained, i.e. computed, by using at least one row in each source image (i.e. at least one row in the first source image and at least one row in the second source image) stored during the step 81.

Naturally, steps 81 and 82 may be reiterated to obtain one motion vector for each pixel of the image to be interpolated, or for each pixel of a part of the pixels forming the image to be interpolated.

According to a variant, the number of rows selected in each source image is further determined according to the temporal distance $\delta t1$, $\delta t2$ separating the image to be interpolated from the first source image and the second source image respectively.

According to another variant, the obtained motion vector is used to determine the grey level (for example one grey level for each color of the color space of the image, for example RGB) to be associated with the pixel. To that aim, the method comprises computing a value to be associated with the pixel by motion-compensated interpolation of the first and second source images based on at least a part of the stored rows and on the obtained motion vector.

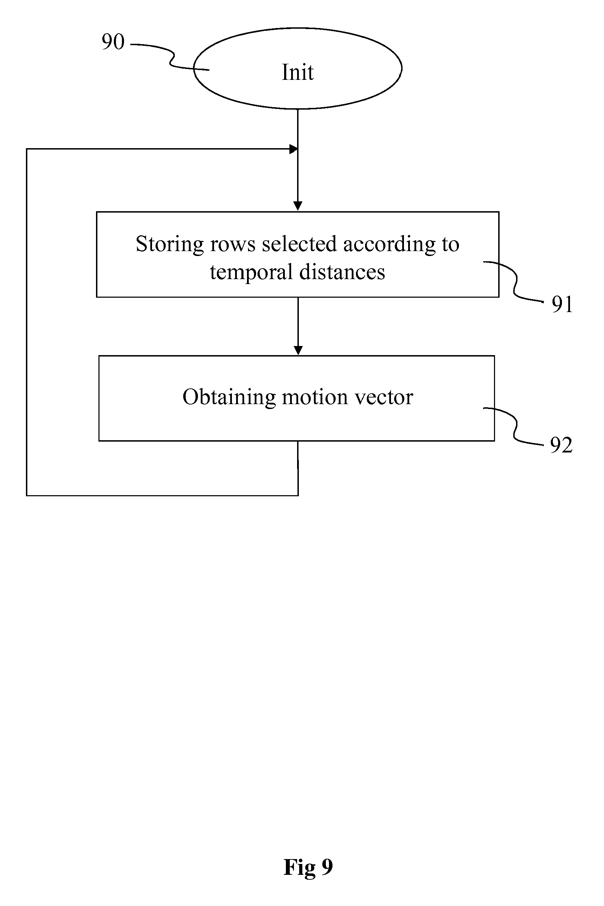

**Figure 9** shows a method of obtaining a motion vector associated with a pixel P of an image that is temporally surrounded by a first and a second source images, the method being implemented in the processing unit 6 or 7, according to a second particular and non-limiting embodiment of the present principles.

During an initialisation step 90, the different parameters of the processing unit 6 or 7 are updated. In particular, the values of the vertical pitch (or the subsampling parameters), the temporal distances $\delta t1$, $\delta t2$ as well as the data representative of the source images are initialised in any way.

Then, during a step 91, rows selected in the first and in the second source images are stored in one or more memories, cache or buffer. The rows to be stored are advantageously selected in the first and second source images, the number of rows selected in the first source image and the number of rows selected in the second source image being obtained, i.e. computed, from the temporal distance $\delta t1$ / $\delta t2$ separating the image to be interpolated and the first source image / the second source image respectively.

Then, during a step 82, the motion vector associated with the pixel P is obtained, i.e. computed, by using at least one row in each source image (i.e. at least one row in the first source image and at least one row in the second source image) stored during the step 81.

Naturally, steps 81 and 82 may be reiterated to obtain one motion vector for each pixel of the image to be interpolated, or for each pixel of a part of the pixels forming the image to be interpolated.

According to a variant, the number of rows obtained in step 81 is further reduced by selecting some of the rows according to a vertical pitch, the value of which varying according to a vertical distance.

According to another variant, the obtained motion vector is used to determine the grey level (for example one grey level for each color of the color space of the image, for example RGB) to be associated with the pixel. To that aim, the method comprises computing a value to be associated with the pixel by motion-compensated interpolation of the first and second source images based on at least a part of the stored rows and on the obtained motion vector.

Naturally, the present disclosure is not limited to the embodiments previously described.

In particular, the present disclosure is not limited to a method of obtaining a motion vector (and the corresponding device) but also extends to a method of motion-compensated interpolation of source images to generate an interpolated image temporally surrounded by the source images and also extends to a corresponding device configured to implement the motion-compensated interpolation method. The present disclosure further relates to a method of displaying the interpolated images and to a device configured to display the interpolated images.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of obtaining a motion vector associated with a pixel (210) of an image (11) temporally surrounded by a first source image (10) and a second source image (12), **characterized in that** the method comprises:

   - storing (81) a plurality of rows (301 to 310; 321 to 330) selected in the first source image (10) and in the second source image (12), the stored rows being selected according to at least a vertical pitch that varies according to a vertical distance with regard to a reference row (2000; 2002) in each of the first (10) and second (12) source images, the reference rows corresponding to the rows of the first and second source images vertically aligned with said pixel (210);

- obtaining (82) said motion vector from at least a part of the stored (301 to 310; 321 to 330) rows.

2. The method according to claim 1, wherein said at least a vertical pitch increases with said vertical distance.

3. The method according to one of claims 1 and 2, wherein the stored rows (301 to 310) of the first source image (10) are selected according to a first vertical pitch and the stored rows (321 to 330) of the second source image (12) are selected according to a second vertical pitch, the first vertical pitch and the second vertical pitch varying differently.

4. The method according to one of claims 1 to 3, wherein said at least a vertical pitch varies according to a temporal distance ($\delta t1$, $\delta t2$) separating said image (11) from the first source image (10) or the second source image (12).

5. The method according to one of claims 1 to 4, wherein the number of stored rows of the first source image (10) and of the second source image (12) depends from a temporal distance ($\delta t1$, $\delta t2$) separating said image (11) from the first source image (10) and the second source image (12) respectively.

6. The method according to one of claims 1 to 5, further comprising computing a value to be associated with said pixel by motion-compensated interpolation of the first (10) and second (12) source images based on at least a part of the stored rows (301 to 310; 321 to 330) and on the obtained motion vector.

7. A device (6; 7) configured to obtain a motion vector associated with a pixel of an image temporally surrounded by a first source image and a second source image, **characterized in that** the device comprises:

- storage means (62, 63; 721) for storing a plurality of rows selected in the first source image and in the second source image, the stored rows being selected according to at least a vertical pitch that varies according to a vertical distance with regard to a reference row in each of the first and second source images, the reference rows corresponding to the rows of the first and second source images vertically aligned with said pixel;
- processing means (61, 64; 720) for obtaining said motion vector from at least a part of the stored rows.

8. The device according to claim 7, wherein said at least a vertical pitch increases with said vertical distance.

9. The device according to one of claims 7 and 8, further comprising means for selecting the stored rows of the first source image according to a first vertical pitch and the stored rows of the second source image according to a second vertical pitch, the first vertical pitch and the second vertical pitch varying differently.

10. The device according to one of claims 7 to 9, wherein said at least a vertical pitch varies according to a temporal distance separating said image from the first source image or the second source image.

11. The device according to one of claims 7 to 10, wherein the number of stored rows of the first source image and of the second source image depends from a temporal distance separating said image from the first source image and the second source image respectively.

12. The device according to one of claims 7 to 11, further comprising means for computing a value to be associated with said pixel by motion-compensated interpolation of the first and second source images based on at least a part of the stored rows and on the obtained motion vector.

13. A computer program product comprising instructions of program code for executing steps of the method according to one of claims 1 to 6, when said program is executed on a computer.

14. A processor readable medium having stored therein instructions for causing a processor to perform at least the steps of the method according to any of claims 1 to 6.

**Fig 1**

Fig 2A

Fig 2B

**Fig 3**

**Fig 4**

**Fig 5**

**Fig 6**

7

71

CPU

72

76

ROM

Prog

760

Graphic board

720

GPUs

GRAM

721

1st and 2nd source images

7211

Interpolated image

7212

Motion vectors

7213

Pitch(es)

7214

δt1, δt2

7215

77

RAM

Prog

770

First source image

771

Second source image

772

730

Display

73

75

74

I/O devices

78

Power supply

**Fig 7**

80 — Init

Storing rows selected according to vertical pitch(es) — 81

Obtaining motion vector — 82

**Fig 8**

**Fig 9**

Europäisches
Patentamt

European
Patent Office

Office européen
des brevets

## EUROPEAN SEARCH REPORT

Application Number

EP 15 30 5342

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 96/41482 A1 (FUTURETEL INC [US]) 19 December 1996 (1996-12-19) * figure 2 * * figures 4a-4c * * figure 5 * * figure 7b * ----- | 1-14 | INV. H04N19/43 H04N19/59 H04N19/577 |
| X | US 8 692 933 B1 (NAMBOODRI VIPIN [IN]) 8 April 2014 (2014-04-08) * figure 1 * * figure 2 * * figure 3 * ----- | 1-14 | |
| X | GB 2 435 360 A (IMAGINATION TECH LTD [GB]) 22 August 2007 (2007-08-22) * figure 1 * * figure 5 * * figure 6 * ----- | 1-14 | |
| A | WO 2009/115867 A1 (ZORAN FRANCE [FR]; BRUNA ESTRACH JOAN [FR]) 24 September 2009 (2009-09-24) * figure 6 * * figure 8 * ----- | 1-14 | TECHNICAL FIELDS SEARCHED (IPC) H04N |
| A | US 6 137 837 A (NEMIROFF ROBERT [US] ET AL) 24 October 2000 (2000-10-24) * figure 3 * * figure 4 * ----- | 1-14 | |
| A | US 2004/114688 A1 (KANG JUNG-SUN [KR]) 17 June 2004 (2004-06-17) * figure 3 * * figure 5 * ----- | 1-14 | |

The present search report has been drawn up for all claims

| Place of search | Date of completion of the search | Examiner |
|---|---|---|
| The Hague | 2 September 2015 | Martinière, Anthony |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 065 404 A1**

**ANNEX TO THE EUROPEAN SEARCH REPORT
ON EUROPEAN PATENT APPLICATION NO.**

EP 15 30 5342

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2015

| Patent document cited in search report | | | Publication date | Patent family member(s) | | | Publication date |
|---|---|---|---|---|---|---|---|
| WO 9641482 | A1 | | 19-12-1996 | AU | 6379096 | A | 30-12-1996 |
| | | | | CA | 2218865 | A1 | 19-12-1996 |
| | | | | US | 5731850 | A | 24-03-1998 |
| | | | | WO | 9641482 | A1 | 19-12-1996 |
| US 8692933 | B1 | | 08-04-2014 | US | 8692933 | B1 | 08-04-2014 |
| | | | | US | 8922712 | B1 | 30-12-2014 |
| GB 2435360 | A | | 22-08-2007 | EP | 1987676 | A1 | 05-11-2008 |
| | | | | GB | 2435360 | A | 22-08-2007 |
| | | | | JP | 5594968 | B2 | 24-09-2014 |
| | | | | JP | 2009527173 | A | 23-07-2009 |
| | | | | US | 2007217517 | A1 | 20-09-2007 |
| | | | | US | 2012269400 | A1 | 25-10-2012 |
| | | | | US | 2014269921 | A1 | 18-09-2014 |
| | | | | WO | 2007093768 | A1 | 23-08-2007 |
| WO 2009115867 | A1 | | 24-09-2009 | US | 2011096227 | A1 | 28-04-2011 |
| | | | | WO | 2009115867 | A1 | 24-09-2009 |
| US 6137837 | A | | 24-10-2000 | NONE | | | |
| US 2004114688 | A1 | | 17-06-2004 | KR | 20040050127 | A | 16-06-2004 |
| | | | | US | 2004114688 | A1 | 17-06-2004 |
| | | | | US | 2008205526 | A1 | 28-08-2008 |

EPO FORM P0459

For more details about this annex : see Official Journal of the European Patent Office, No. 12/82